# EUROPEAN PATENT APPLICATION

(11) **EP 2 157 051 A2**
(43) Date of publication of application: **24.02.2010**
(21) Application number: 09168531.3
(22) Date of filing: 24.08.2009
(51) Int. Cl.: C01B 33/035

(54) **Harvest apparatus for harvesting polycrystalline silicon rods, combined apparatus and method of using the same**

(30) Priority: 22.08.2008 CN 200810107025
(71) Applicant: LDK Solar Hi-Tech Co., Ltd., Xinyu 338000 (CN)
(72) Inventor: Baldi, Carlo, 39012 Merano (BZ) (IT); Marsilio, Matteo, 39100 Bolzano (IT); Scandola, Pietro, 39012 Merano (BZ) (IT)
(74) Representative: Hudy, Ludwik

(57) **Abstract**

A method for harvesting polycrystalline silicon rods by providing multiple polycrystalline silicon rods disposed on multiple concentric circular rings, harvesting polycrystalline silicon rods disposed on an outermost circular ring, harvesting polycrystalline silicon rods disposed on a circular ring closely adjacent to the outermost circular ring, and repeating the above step from the outside to the inside of the circular rings until all of the polycrystalline silicon rods are harvested. The invention prevents risks of contaminating the polycrystalline silicon rods during a transferring process and hurting the operator by the polycrystalline silicon rods, and reduces time spent on transferring the polycrystalline silicon rods and a production period thereof.

## Description

The invention relates to a photovoltaic and semiconductor field, and more particularly to a harvest apparatus for harvesting polycrystalline silicon rods, combined harvest apparatus and method of using the same.

Silicon materials have emerged as the cornerstone of modern electronics. Crystalline silicon, also called wafer silicon, is a material consisting of small silicon crystals. In single crystal silicon, also called monocrystal, the crystal lattice of the entire sample is continuous and unbroken with no grain boundaries. Polycrystalline silicon is a material consisting of multiple small silicon crystals.

High purity polycrystalline silicon features very high purity of 99.999999% - 99.9999999% and impurity content of 10⁻⁹, and is usually obtained by chemical or physical purification of metallurgical silicon. During chemical purification, firstly, silicon is turned into intermediate compound via chemical reaction, then the intermediate compound is purified via rectification purification and other technologies, thirdly, the intermediate compound is put into a reactor, and reduced into silicon via a CVD (chemical vapor deposition) or a fluidized bed technology. At this time, the high purity silicon is in a poly-crystalline state, which meets requirements of the semiconductor industry.

The CVD means heating a silicon filament (with a diameter of about 5 mm) on electrodes on a polycrystalline silicon reduction furnace to more than 1100°C via the electrodes (a reactor for a CVD reaction is referred to as a polycrystalline silicon reduction furnace, and comprises a base plate and cover), adding an intermediate compound and high purity hydrogen for a reduction reaction, generating and depositing high purity silicon on the silicon filament via the CVD technology whereby allowing the silicon filament to grow until its diameter is dozens or several hundred millimeters.

After using the CVD technology to produce high purity polycrystalline silicon and obtaining high purity polycrystalline silicon rod via the CVD reaction, there is a process of transferring the polycrystalline silicon rods from the base plate for the polycrystalline silicon reduction furnace to the next production process. This process is usually referred to as a harvest process and is a manual operation, which affect safety of an operator, quality of the polycrystalline silicon rod and a production period of the polycrystalline silicon rod.

A traditional harvest method comprises: removing the cover of the polycrystalline silicon reduction furnace from the base plate after reaction, exposing the polycrystalline silicon rod in an environment, detaching a graphite chuck from the electrode on the base plate manually or via manipulators, taking the silicon rods out pair by pair, and transporting the polycrystalline silicon rod to the next production process.

However, the above-mentioned harvest method has the following problems:
(1) The polycrystalline silicon rods are exposed in the environment, which causes contamination of the polycrystalline silicon rods by ions, CO₂ and other materials in the environment, and influences quality of the polycrystalline silicon rods.
(2) Operators or manipulators in the traditional harvest method transfer the rod to the next production process one by one, and only one pair can be transferred at one time. The current polycrystalline silicon hydrogen reactor normally has 24 pairs or 18 pairs of polycrystalline silicon rods, and therefore the operator or the manipulator has to transport the rods for 24 times, which makes operation complicated and takes too much time.
(3) Since cleaning of the base plate and next reaction of the polycrystalline silicon reduction furnace can be conducted only after all polycrystalline silicon rods are transferred from the base plate, too long harvest time influences the next reaction and delay a production period.
(4) The polycrystalline silicon is a very sharp and brittle material, it is easy to be broken and hurt the operator during manual harvest.

In view of the above-described problems, it is one objective of the invention to provide a method for harvesting polycrystalline silicon rods that features high safety, improved quality of the silicon rods, and reduced harvest time.

It is another objective of the invention to provide an apparatus for manufacturing polycrystalline silicon rods that features high safety, improved quality of the silicon rods, and reduced harvest time.

It is a further objective of the invention to provide a combined harvest apparatus or a combined harvest equipment for manufacturing polycrystalline silicon rods that features high safety, improved quality of the silicon rods, and reduced harvest time. 1.

A harvest apparatus for harvesting polycrystalline silicon rods comprises a wall having an inner wall, an outer wall and multiple wall connectors connecting said inner wall with said outer wall, a cavity formed between said inner wall and said outer wall and adapted to receive a plurality of silicon rods resting on a base plate disposed at the bottom of said cavity and a contact disposed above said base plate and adapted to detach said plurality of silicon rods from said base plate and allowing said plurality of silicon rods to become loose within said cavity.

Preferably, said contact is disposed on said wall.

Preferably, the harvest apparatus further comprises a beam, and a connector operating to connect the top of the wall to said beam.

Preferably, said inner wall and said outer wall are cylindrical and concentric and surround the cavity in a form of a cylinder.

Preferably, the harvest apparatus further comprises a guide rail for guiding said wall during lifting up and lowering down.

Preferably, a harvest door is disposed in said wall.

A combined harvest apparatus for harvesting polycrystalline silicon rods comprises an inner harvest apparatus for harvesting polycrystalline silicon, a middle harvest apparatus for harvesting polycrystalline silicon and an outer harvest apparatus for harvesting polycrystalline silicon wherein each of said inner harvest apparatus, said middle harvest apparatus and said outer harvest apparatus comprises a wall, a cavity, and a contact adapted to detach polycrystalline silicon rods and allowing polycrystalline silicon rods to become loose within said cavity and wherein said cavity is surrounded by said wall, said contact is disposed at the bottom of each of said inner harvest apparatus, said middle harvest apparatus and said outer harvest apparatus. Said inner harvest apparatus, said middle harvest apparatus and said outer harvest apparatus are cylindrical and concentric. Said middle harvest apparatus is disposed in said outer harvest apparatus and said inner harvest apparatus is disposed in said middle harvest apparatus.

Preferably, each of said inner harvest apparatus, said middle harvest apparatus and said outer harvest apparatus comprises a connector operating to connect the top of each of said inner harvest apparatus, said middle harvest apparatus and said outer harvest apparatus to a beam.

Preferably, each of said inner harvest apparatus, said middle harvest apparatus and said outer harvest apparatus comprises a harvest door disposed on said wall.

To achieve the above objective, in accordance with one embodiment of the invention, provided is a method for harvesting polycrystalline silicon rods, comprising providing multiple polycrystalline silicon rods disposed on multiple concentric circular rings, harvesting polycrystalline silicon rods disposed on an outermost circular ring, harvesting polycrystalline silicon rods disposed on a circular ring closely adjacent to the outermost circular ring, and repeating the above step from the outside to the inside of the circular rings until all of the polycrystalline silicon rods are harvested.

In a class of this embodiment, it further comprises covering the polycrystalline silicon rods disposed on a base plate for a polycrystalline silicon reduction furnace with a cavity of a harvest apparatus, applying force on the polycrystalline silicon rods so that the polycrystalline silicon rods are detached from the base plate and fall into the cavity, using a contact to support the polycrystalline silicon rods so that polycrystalline silicon rods with large size are received in the cavity, and upwardly moving the harvest apparatus so that it is detached from the base plate.

In a class of this embodiment, the step of applying force on the polycrystalline silicon rods so that the polycrystalline silicon rods are detached from the base plate and fall into the cavity comprises applying force on the polycrystalline silicon rods via a contact, passing a wall of the harvest apparatus by the contact, applying force on the polycrystalline silicon rods so that they are detached from the base plate.

In a class of this embodiment, the contact is a jumper hammer.

In a class of this embodiment, the step of applying force on the polycrystalline silicon rods so that the polycrystalline silicon rods are detached from the base plate and fall into the cavity comprises applying force on the polycrystalline silicon rods via a contact, so that the polycrystalline silicon rod is detached from the base plate at a contact position between the polycrystalline silicon rod and the contact.

In a class of this embodiment, it further comprises fixing the polycrystalline silicon rod on the harvest apparatus via a contact before applying force on the polycrystalline silicon rods via the contact.

In a class of this embodiment, the contact is disposed on a wall of the harvest apparatus.

In a class of this embodiment, it further comprises fixing a guide rail at the edge of the base plate whereby allowing the harvest apparatus to move accurately before covering the polycrystalline silicon rods disposed on a base plate with a cavity of a harvest apparatus.

In accordance with another embodiment of the invention, provided is a harvest apparatus, comprising a wall, a cavity, and a contact, wherein the cavity is surrounded by the wall, and the contact is disposed at the bottom of the harvest apparatus.

In a class of this embodiment, the contact is disposed on the wall.

In a class of this embodiment, it further comprises a beam, and a connector operating to connect the top of the harvest apparatus to the beam.

In a class of this embodiment, a clamping device is connected to the wall of the harvest apparatus.

In a class of this embodiment, the wall comprises an inner ring, an outer ring and multiple connecting blades, the inner ring and the outer ring are cylindrical and concentric, and the connecting blades are connected between the inner ring and the outer ring.

In a class of this embodiment, it further comprises a harvest door disposed on the wall.

In accordance with a further embodiment of the invention, provided is a combined harvest apparatus or a combined harvest equipment, comprising an inner harvest equipment, a middle harvest equipment, and an outer harvest equipment, wherein each of the inner harvest equipment, the middle harvest equipment and the outer harvest equipment comprises a wall, a cavity, and a contact, the cavity is surrounded by the wall, the contact is disposed at the bottom of each of the inner harvest equipment, the middle harvest equipment and the outer harvest equipment, the inner harvest equipment, the middle harvest equipment and the outer harvest equipment are cylindrical and concentric, the middle harvest equipment is disposed in the outer harvest equipment, and the inner harvest equipment is disposed in the middle harvest equipment.

An inner harvest equipment, a middle harvest equipment, and an outer harvest equipment can be a harvest apparatus.

In a class of this embodiment, the contact is disposed on the wall.

In a class of this embodiment, each of the inner harvest equipment, the middle harvest equipment and the outer harvest equipment comprises a beam, and a connector operating to connect the top of the outer harvest equipment to the beam. In a class of this embodiment, a clamping device is connected to the wall of the outer harvest equipment.

In a class of this embodiment, the wall comprises an inner ring, an outer ring and multiple connecting blades, the inner ring and the outer ring are cylindrical and concentric, and the connecting blades are connected between the inner ring and the outer ring.

In a class of this embodiment, each of the inner harvest equipment, the middle harvest equipment and the outer harvest equipment comprises a harvest door disposed on the wall.

The invention has the following advantages:
(1) during harvest, the polycrystalline silicon rods are protected in a harvest equipment chamber, which prevents a risk of contaminating the polycrystalline silicon rods during a transferring process.
(2) Multiple polycrystalline silicon rods can be transferred to the next production process at one time, whereby improving production efficiency.
(3) Time spent on transferring the polycrystalline silicon rods is decreased, and thus a production period thereof is reduced.
(4) A risk of hurting the operator by the polycrystalline silicon rods is prevented since no manual harvest is needed.

Detailed description of the invention will be given below with reference to accompanying drawings, in which:

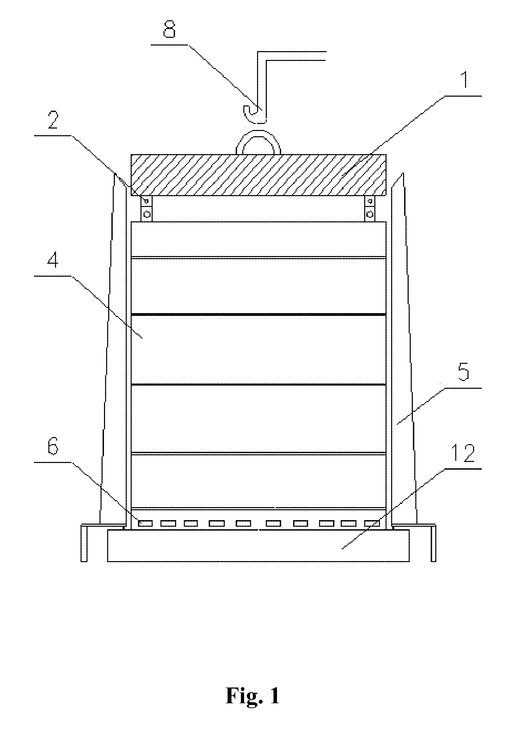

Fig. 1 is a front view of a harvest apparatus of the invention;

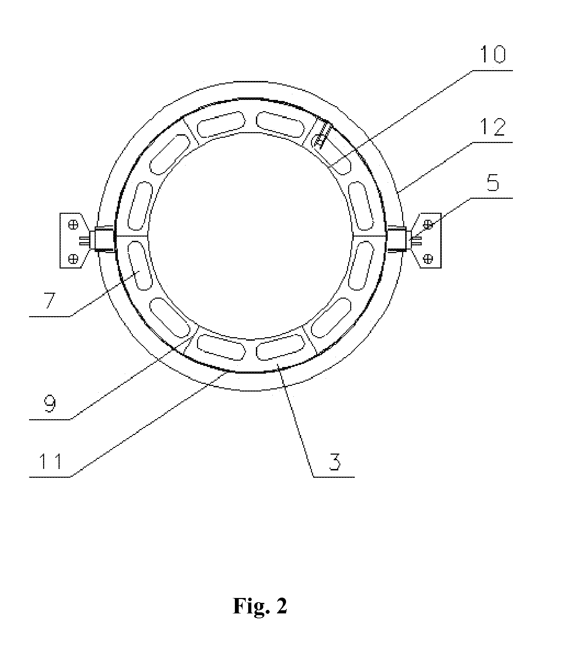

Fig. 2 is a top view of a harvest apparatus of the invention;

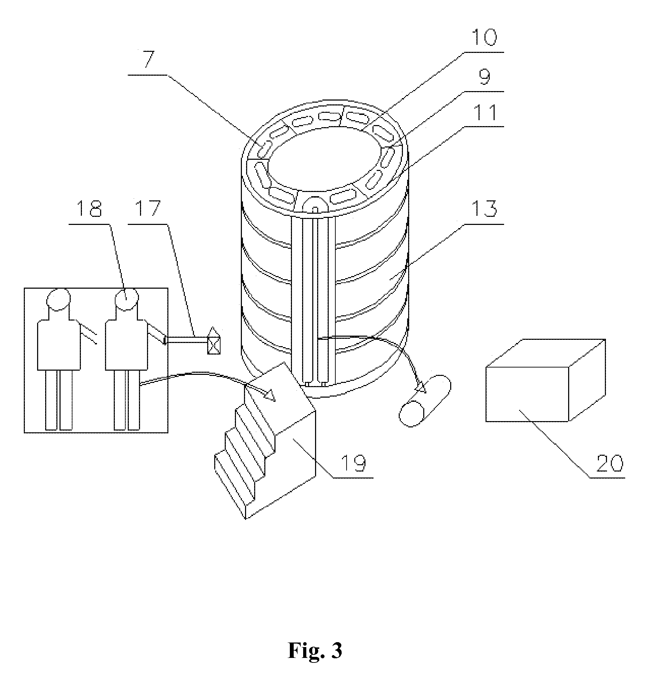

Fig. 3 is a schematic diagram of harvesting a polycrystalline silicon rod via a harvest apparatus of the invention.

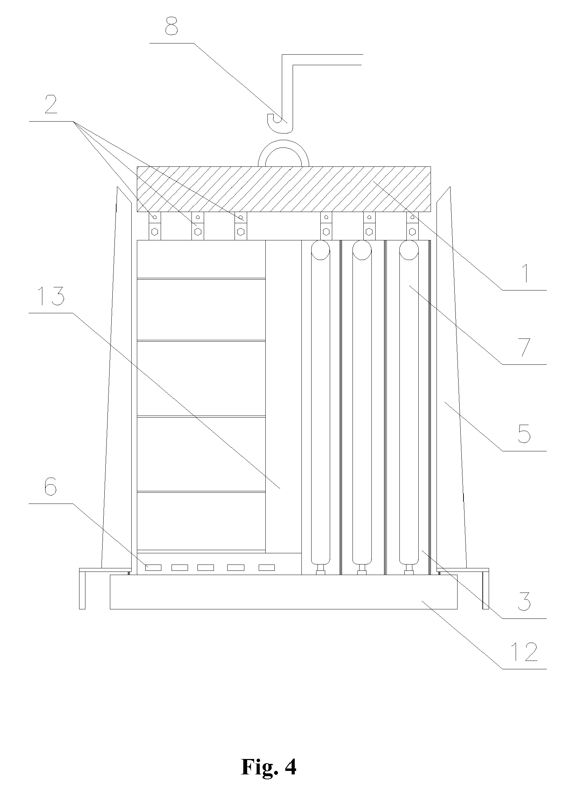

Fig. 4 is a front view of a combined harvest apparatus or a combined harvest equipment of the invention; and

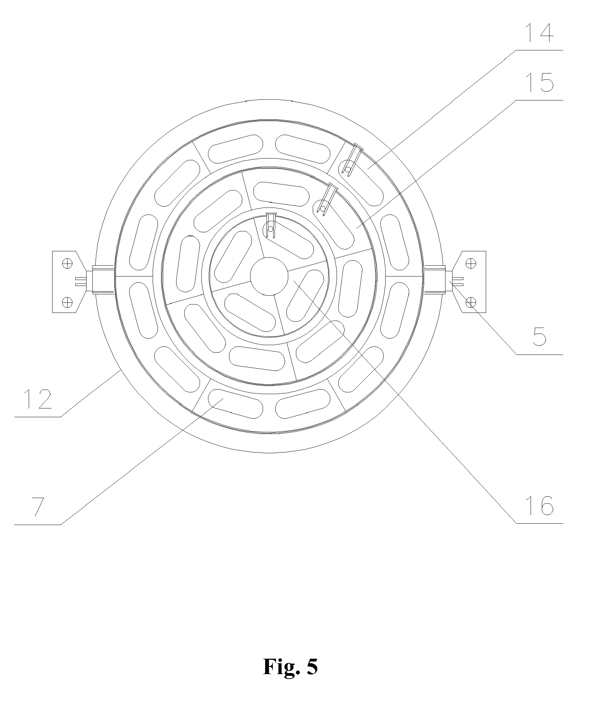

Fig. 5 is a top view of a combined harvest equipment of the invention.

Polycrystalline silicon rods are circumferentially disposed on electrodes of a base plate for a polycrystalline silicon reduction furnace layer by layer (concentrically from the outside to the inside of the reactor). In certain embodiments, there are three layers. A conventional polycrystalline silicon reduction furnace is normally designed to have 24 pairs or 18 pairs of polycrystalline silicon rods. In order to make an apparatus according to this invention that would fit the same number of rods, e.g. 24 pairs, 12 pairs would be placed in the outer layer, 8 pairs in the middle layer, and 4 pairs in the inner layer.

A method for removing polycrystalline silicon rods of the invention comprises chemically vapor deposing multiple polycrystalline silicon rods 7 disposed on multiple concentric circular rings, then removing polycrystalline silicon rods 7 disposed on an outermost circular ring, then, removing polycrystalline silicon rods 7 disposed on a circular ring closely adjacent to the outermost circular ring, and repeating the above step from the outside to the inside of the reactor until all of the polycrystalline silicon rods 7 have been removed.

In one of embodiments, in preparation for the CVD process, polycrystalline silicon rods 7 are attached to the base plate 12 while the wall 4 is lifted up by the crane 8. Contacts 6 are used to support the polycrystalline silicon rod 7. After the rods 7 have been mounted, the wall 4 is lowered into the base plate 4 and the rods 7 are enclosed each pair within a separate cavity 3 formed between the inner wall 10, the outer wall 11, and two adjacent wall connectors 9. When the rods are to be removed at the end of the CVD process, force is applied to contacts 6 to detach the polycrystalline silicon rod 7 from the base plate 12 at the contact position between the polycrystalline silicon rod 7 and the contact 6. The broken polycrystalline silicon rods 7 fall against the wall surrounding the cavity 3 of the harvest apparatus. Finally, the wall 4 of harvest apparatus is detached from the base plate 12 and lifted, and removal of multiple polycrystalline silicon rods 7 is completed.

In this embodiment, the contact 6 is a plug-in module, for example a fork. By using the plug-in module to support the bottom of the polycrystalline silicon rod 7, a crane 8 disposed above the polycrystalline silicon rod 7 operates to detach the polycrystalline silicon rod 7 from the base plate 12 at a contact position between the polycrystalline silicon rod 7 and the contact 6. The separated polycrystalline silicon rod 7 is supported by the plug-in module and operates to support the polycrystalline silicon rod 7 that is detached from the base plate 12. In this embodiment, the above purpose can also be achieved by other types of contacts 6, namely, the contact 6 is used for detaching the polycrystalline silicon rod 7 from the base plate 12 and for supporting the detached polycrystalline silicon rod 7, so that the polycrystalline silicon rod 7 with large size is received in the cavity 3 of the harvest apparatus.

As for methods of harvesting polycrystalline silicon rods 7 on the base plate 12 for a polycrystalline silicon reduction furnace by one time, polycrystalline silicon rods 7 disposed on an outermost circular ring are harvested, or polycrystalline silicon rods 7 disposed on a circular ring closely adjacent to the outermost circular ring are harvested, or all polycrystalline silicon rods 7 disposed on an inner circular ring are harvested, or polycrystalline silicon rods 7 disposed on an outermost circular ring are harvested in a group formed by two adjacent pairs or three adjacent pairs of the harvesting polycrystalline silicon rods 7, or polycrystalline silicon rods 7 disposed on a circular ring closely adjacent to the outermost circular ring are harvested in a group formed by two adjacent pairs or three adjacent pairs of the harvesting polycrystalline silicon rods 7, or polycrystalline silicon rods 7 disposed on an inner circular ring are harvested in a group formed by two adjacent pairs or three adjacent pairs of the harvesting polycrystalline silicon rods 7.

In one of embodiments a cavity 3 of a harvest apparatus is used to cover one side of a polycrystalline silicon rod 7 disposed on a base plate 12 for a polycrystalline silicon reduction furnace; then a jumper hammer is used to break the polycrystalline silicon rod 7 and to detach the polycrystalline silicon rod 7 from the base plate 12. The jumper hammer passes a wall 4 of the harvest equipment, and breaks a contact portion between the polycrystalline silicon rod 7 and the jumper hammer, so that the polycrystalline silicon rod 7 is detached from the base plate 12 and the polycrystalline silicon rod 7 falls into the cavity 3 of the harvest equipment.

In this embodiment, the contact 6 is a movable bottom plate or a meshwork, and capable of supporting the polycrystalline silicon rod 7 so that a polycrystalline silicon rod 7 with large size is received in the cavity 3 of the harvest equipment. Finally, the harvest equipment is upwardly moved so that it is detached from the base plate 12, and harvesting of multiple polycrystalline silicon rods 7 is completed.

In other embodiments, other devices, such as cutters, manipulators and so on, are used to detach the polycrystalline silicon rod 7 from the base plate 12.

In one of embodiments firstly, a cavity 3 of a harvest equipment is used to cover polycrystalline silicon rods 7 disposed on a base plate 12 for a polycrystalline silicon reduction furnace, a contact 6 is used to fix the polycrystalline silicon rods 7 on the harvest equipment, then force is applied on a contact 6 to detach the polycrystalline silicon rod 7 from the base plate 12 at a contact position between the polycrystalline silicon rod 7 and the contact 6, and the polycrystalline silicon rod 7 falls into the cavity 3 of the harvest equipment. The contact 6 is used to support the polycrystalline silicon rod 7, so that the detached polycrystalline silicon rod 7 with large size is received in the cavity 3. Finally, the harvest equipment is upwardly moved so that it is detached from the base plate 12, and harvesting of multiple polycrystalline silicon rods 7 is completed.

In one of embodiments a guide rail 5 is disposed on the edge of the base plate 12 for a polycrystalline silicon reduction furnace whereby allowing the harvest equipment to move accurately before a cavity 3 of a harvest equipment is used to cover polycrystalline silicon rods 7 disposed on a base plate 12. Other steps are the same as above.

In one of embodiments for harvesting polycrystalline silicon rods 7 disposed on multiple concentric circular rings, two adjacent pairs of polycrystalline silicon rods 7 disposed on an outermost circular ring are firstly harvested, other two adjacent pairs of polycrystalline silicon rods 7 disposed on the outermost circular ring are harvested, ... , until the rest of the polycrystalline silicon rods 7 disposed on the outermost circular ring are harvested, then two adjacent pairs of polycrystalline silicon rods 7 disposed on a circular ring closely adjacent to the outermost circular ring are harvested, other two adjacent pairs of polycrystalline silicon rods 7 disposed on the circular ring closely adjacent to the outermost circular ring are harvested, ... , until the rest of the polycrystalline silicon rods 7 disposed on the circular ring closely adjacent to the outermost circular ring are harvested. Finally two adjacent pairs of polycrystalline silicon rods 7 disposed on an innermost circular ring are harvested, other two adjacent pairs of polycrystalline silicon rods 7 disposed on the innermost circular ring are harvested, ... , until the rest of the polycrystalline silicon rods 7 disposed on the innermost circular ring are harvested

In one of embodiments a harvest apparatus comprises a cavity 3, a wall 4, and a contact 6. The cavity 3 is surrounded by the wall 4, and the contact 6 is disposed at the bottom of the harvest equipment. A hole is disposed at the bottom of the wall 4 and allows the contact 6 to pass through.

In one of embodiments the wall 4 of the harvest apparatus comprises an inner ring 10, an outer ring 11 and multiple connecting blades 9, the inner ring 10 and the outer ring 11 are cylindrical and concentric, and the connecting blades 9 are connected between the inner ring 10 and the outer ring 11.

In this embodiment, the contact 6 is disposed on the wall 4 of the harvest apparatus. The harvest apparatus further comprises a connector 2 and a beam 1, and the top of the harvest apparatus 14 is fixed on the beam 1 via the connector 2.

In one of embodiments a clamping device is connected to the wall 4 of the harvest equipment (not shown). In this embodiment, the clamping device is a sliding door disposed at the top and bottom of the harvest apparatus.

In one of embodiments a harvest door 13 is disposed on the wall 4 of the harvest equipment.

In one of embodiments a combined harvest apparatus or a combined harvest equipment comprises an inner harvest equipment 16, a middle harvest equipment 15, and an outer harvest equipment 14 that that have different radiuses and are cylindrical and concentric. The middle harvest equipment 15 is disposed at the center of the outer harvest equipment 14, and the inner harvest equipment 16 is disposed at the center of the middle harvest equipment 15.

In one of embodiments a combined harvest equipment comprises an inner harvest equipment 16, a middle harvest equipment 15, and an outer harvest equipment 14 that have different radiuses and are cylindrical and concentric. The middle harvest equipment 15 is disposed at the center of the outer harvest equipment 14, and the inner harvest equipment 16 is disposed at the center of the middle harvest equipment 15. The top of each of the inner harvest equipment 16, the middle harvest equipment 15 and the outer harvest equipment 14 is fixed on a beam 1 via a connector 2, and the beam 1 is connected to a crane 8.

In this embodiment, a method of detaching a polycrystalline silicon rods 7 from a base plate 12 for a polycrystalline silicon reduction furnace is as follows: force is applied to the polycrystalline silicon rod 7 via a contact so that it is detached from the base plate 12, or force is applied to the polycrystalline silicon rod 7 via an external device so that it is detached from the base plate 12, or the polycrystalline silicon rods 7 are detached from the base plate 12 one by one manually, or the polycrystalline silicon rod 7 is detached from the base plate 12 by using a vertical or horizontal jumper hammer to break the polycrystalline silicon rod 7. Other devices such as a manual crowbar, a manual folk, a manual hammer, a mechanical jumper hammer, a mechanical gripper, a mechanical crowbar, a mechanical folk and so on can also be used to detach the polycrystalline silicon rod 7 from the base plate 12.

Moreover, the following methods can be used to detach the polycrystalline silicon rod 7 from the base plate 12.

For example, a cavity 3 of the harvest equipment is used to cover the polycrystalline silicon rod 7 disposed on the base plate, after the harvest equipment is positioned, a manual crowbar passes through the wall 4 of the harvest equipment whereby detaching the polycrystalline silicon rod 7 from the base plate 12.

As another example, a cavity 3 of the harvest equipment is used to cover the polycrystalline silicon rod 7 disposed on the base plate, after the harvest equipment is positioned, a horizontal jumper hammer is used to hit the polycrystalline silicon rod 7 from the base plate 12, so that the polycrystalline silicon rod 7 is detached from the base plate 12 at a contact position between the polycrystalline silicon rod 7 and the horizontal jumper hammer, and falls into the cavity 3.

As a further example, a cavity 3 of the harvest equipment is used to cover the polycrystalline silicon rod 7 disposed on the base plate, after the harvest equipment is positioned, a suspended-type jumper hammer is mechanically disposed in the cavity 3 of the harvest equipment and used to hit the polycrystalline silicon rod 7, so that the polycrystalline silicon rod 7 is broken and detached from the base plate 12 at a contact position between the polycrystalline silicon rod 7 and the suspended-type jumper hammer, and falls into the cavity 3.

A method for supporting the polycrystalline silicon rod 7 after it is detached from the base plate 12 is as follows.

In order to keep the polycrystalline silicon rod 7 detached from the base plate 12 in the harvest equipment, a component operating to support the polycrystalline silicon rod 7 is required. A contact 6 disposed at the bottom of the harvest equipment can be used to implement this.

For example, the contact 6 is a movable bottom plate disposed at the bottom of the harvest equipment. Firstly the movable bottom plate is folded so that is will not break the polycrystalline silicon rod 7, then a cavity 3 of the harvest equipment is used to cover the polycrystalline silicon rod 7 disposed on the base plate 12, after that, the movable bottom plate is unfolded so that the cavity 3 is separated from the base plate 12. In this embodiment, the movable bottom plate is formed by multiple sheets and capable of stretching, and does not occupy place when it is unfolded. The polycrystalline silicon rod 7 can be detached from the base plate 12 by passing the movable bottom plate through a hole on the wall 4 of the harvest equipment and clamping( or fixing or supporting) the polycrystalline silicon rod 7. Since the cavity 3 is separated from the base plate 12, the polycrystalline silicon rod 7 detached from the base plate 12 falls into the cavity 3. Thus the movable bottom plate implements a function of supporting.

The contact 6 is a plug-in module disposed at the bottom of the harvest equipment, such as a folk. The plug-in module passes through the wall 4 and prevents the polycrystalline silicon rod 7 detached from the base plate 12 from detaching from the cavity 3. The plug-in module also implements a function of supporting.

For example, the contact 6 is a meshwork passing through the cavity 3 from the top via a mechanical arm. The meshwork is fit on the polycrystalline silicon rod 7 and has a function of supporting. One end of the meshwork is hanged on the harvest equipment. Multiple holes are disposed at the bottom of the wall 4 and allow the contact 6 to pass through and to clamp the bottom of the polycrystalline silicon rod 7 without being blocked by the polycrystalline silicon rod 7 or separating blades.

A method for transferring the polycrystalline silicon rod 7 detached from the base plate 12 is as follows.

As for the polycrystalline silicon rod 7 detached from the base plate 12 falls into the cavity 3 and surrounded by the wall 4, the harvest equipment is hoisted upwardly via the crane 8 and detached from the base plate 12, or detached from the base plate 12 by upwardly moving a clamping device surrounding the wall 4 via a mechanical arm, whereby implementing transferring of the polycrystalline silicon rod 7. Multiple polycrystalline silicon rod 7 are received in the cavity 3, and efficiency of transferring the polycrystalline silicon rod 7 by one time is far higher than that of a traditional method that can only transfer one polycrystalline silicon rod 7 or a pair of polycrystalline silicon rods 7 by one time. In addition, the wall 4 has a function of protection, and is capable of preventing risks of hurting an operator 18 during transferring and contaminating the polycrystalline silicon rod 7.

A method of harvesting the polycrystalline silicon rod after it is transferred is as follows.

The harvest equipment with multiple polycrystalline silicon rods 7 is aligned with the bottom of a container of a track 20 via the crane 8. Then the movable bottom plate is slowly opened so that the polycrystalline silicon rods 7 fall into the container of the track 20. Finally the track 20 transports the polycrystalline silicon rods 7 to the next workshop. Alternatively, the harvest equipment with multiple polycrystalline silicon rods 7 is aligned with the bottom of a container of a track 20 via the mechanical arm and the clamping device. Then the harvest door 13 is opened and the operator 18 takes out the polycrystalline silicon rods 7 from the harvest door 13 and puts them in the container of the track 20. Finally the track 20 transports the polycrystalline silicon rods 7 to the next workshop.

Alternatively, , the harvest equipment with multiple polycrystalline silicon rods 7 is put on a rotatable sheet, and the operator 18 takes out the polycrystalline silicon rods 7 from the harvest door 13 and puts them in the container of the track 20. Finally the track 20 transports the polycrystalline silicon rods 7 to the next workshop.

The operator 18 is capable of doing various auxiliary tasks via a ladder 19 and a hammer 17.

The above-mentioned tasks of detaching the polycrystalline silicon rod 7 from the base plate 12, and supporting, transferring and harvesting are independent from each other and can be combined with each other.

The inner harvest equipment 16, the middle harvest equipment 15, and the outer harvest equipment 14 that have different diameters can be combined whereby implementing harvesting of the polycrystalline silicon rod 7 on the base plate 12.

It should be noted that the harvest equipment and the method using the same in this invention are not limited to polycrystalline silicon rods 7 that are circularly arranged, and can be applied to polycrystalline silicon rods 7 that are arranged in arrays or other formats, as long as the wall 4 has a shape suitable for these polycrystalline silicon rods 7, and the cavity 3 and the contact 6 are used.

The invention has the following advantages:
(1) During harvest, the polycrystalline silicon rods are protected in a harvest equipment chamber, which prevents a risk of contaminating the polycrystalline silicon rods during a transferring process.
(2) Multiple polycrystalline silicon rods can be transferred to the next production process at one time, whereby improving production efficiency.
(3) Time spent on transferring the polycrystalline silicon rods is decreased, and thus a production period thereof is reduced.
(4) A risk of hurting the operator by the polycrystalline silicon rods is prevented since no manual harvest is needed.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. A harvest apparatus for harvesting polycrystalline silicon rods, comprising:
a wall (4) comprising an inner wall (10), an outer wall (11) and multiple wall connectors (9) connecting said inner wall (10) with said outer wall (11);
a cavity (3) formed between said inner wall (10) and said outer wall (11) and adapted to receive a plurality of silicon rods (7) resting on a base plate (12) disposed at the bottom of said cavity (3); and
a contact (6) disposed above said base plate (12) and adapted to detach said plurality of silicon rods (7) from said base plate (12) and allowing said plurality of silicon rods (7) to become loose within said cavity (3).

2. The harvest apparatus of claim 1, wherein said contact (6) is disposed on said wall (4).

3. The harvest apparatus of claim1, further comprising a beam (1) and a connector (2) operating to connect the top of the wall (4) to said beam (1).

4. The harvest apparatus of claim 1, wherein said inner wall (10) and said outer wall (11) are cylindrical and concentric.

5. The harvest apparatus of claim 1, comprising further a guide rail (5) for guiding said wall (4) during lifting up and lowering down.

6. The harvest apparatus of claim 1, wherein a harvest door (13) is disposed in said wall (4).

7. A combined harvest apparatus for harvesting polycrystalline silicon rods of claim 1, comprising
an inner harvest apparatus (16) for harvesting polycrystalline silicon;
a middle harvest apparatus (15) for harvesting polycrystalline silicon; and
an outer harvest apparatus (14) for harvesting polycrystalline silicon;
wherein
each of said inner harvest apparatus (16), said middle harvest apparatus (15) and said outer harvest apparatus (14) comprises a wall (4), a cavity (3), and a contact (6) adapted to detach polycrystalline silicon rods and allowing polycrystalline silicon rods to become loose within said cavity;
said cavity (3) is surrounded by said wall (4);
said contact (6) is disposed at the bottom of each of said inner harvest apparatus (16); said middle harvest apparatus (15) and said outer harvest apparatus (14);
said inner harvest apparatus (16), said middle harvest apparatus (15) and said outer harvest apparatus (14) are cylindrical and concentric;
said middle harvest apparatus (15) is disposed in said outer harvest apparatus (14); and said inner harvest apparatus (16) is disposed in said middle harvest apparatus (15).

8. The combined harvest apparatus of claim 7, wherein each of said inner harvest apparatus (16), said middle harvest apparatus (15) and said outer harvest apparatus (14) comprises a connector (2) operating to connect the top of each of said inner harvest apparatus (16), said middle harvest apparatus (15) and said outer harvest apparatus (14) to a beam (1).

9. The combined harvest apparatus of claim 7, wherein each of said inner harvest apparatus (16), said middle harvest apparatus (15) and said outer harvest apparatus (14) comprises a harvest door (13) disposed on said wall (4).

10. A method for harvesting polycrystalline silicon rods, comprising
providing multiple polycrystalline silicon rods disposed in multiple concentric cavities; harvesting polycrystalline silicon rods disposed in an outermost cavity;
harvesting polycrystalline silicon rods disposed in a cavity circular closely adjacent to said outermost cavity; and
repeating the above step from the outside to the inside of said cavities until all of said polycrystalline silicon rods are harvested.

11. The method for harvesting polycrystalline silicon rods of claim 10, further comprising
covering said polycrystalline silicon rods (7) disposed on a base plate (12) for a polycrystalline silicon reduction furnace with walls surrounding each cavity of multiple concentric cavities;
applying force on said polycrystalline silicon rods (7) so that said polycrystalline silicon rods (7) are detached from said base plate (12) and fall into said cavity (3);
using a contact (6) to support said polycrystalline silicon rods(7) so that polycrystalline silicon rods (7) with large size are received in said cavity(3); and
upwardly moving said walls surrounding each cavity of multiple concentric cavities so that polycrystalline silicon rods are detached from said base plate (12).

12. The method for harvesting polycrystalline silicon rods of claim 11, wherein the step of applying force on said polycrystalline silicon rods (7) so that said polycrystalline silicon rods (7) are detached from said base plate (12) and fall into said cavity (3) comprises applying force on said polycrystalline silicon rods (7) via a contact (6), passing said wall (4) by said contact (6), applying force on said polycrystalline silicon rods (7) so that they are detached from said base plate (12).

13. The method for harvesting polycrystalline silicon rods of claim 10, wherein said contact (6) is a jumper hammer.

14. The method for harvesting polycrystalline silicon rods of claim 11, wherein the step of applying force on said polycrystalline silicon rods (7) so that said polycrystalline silicon rods (7) are detached from said base plate (12) and fall into said cavity (3) comprises applying force on said polycrystalline silicon rods (7) via said contact (6), so that said polycrystalline silicon rod (7) is detached from said base plate (12) at a contact position between said polycrystalline silicon rod (7) and said contact (6).

15. The method for harvesting polycrystalline silicon rods of claim 10, further comprising fixing a guide rail (5) at an edge of said base plate (12) whereby allowing said walls surrounding each cavity of multiple concentric cavities to move accurately before covering said polycrystalline silicon rods (7) disposed on said base plate (12).
